Europäisches Patentamt

European Patent Office

Office européen des brevets

(11) Numéro de publication: **0 224 416**
**A1**

# (12) DEMANDE DE BREVET EUROPEEN

(21) Numéro de dépôt: **86402557.2**

(22) Date de dépôt: **18.11.86**

(51) Int. Cl.⁴: **A 21 B 5/03**

(30) Priorité: **18.11.85 FR 8517022**

(43) Date de publication de la demande:
**03.06.87 Bulletin 87/23**

(84) Etats contractants désignés: **ES GR**

(71) Demandeur: **Bianchi, Vittorio-Luigi**
**9, Place de la Porte de Passy**
**F-75016 Paris (FR)**

(72) Inventeur: **Bianchi, Vittorio-Luigi**
**9, Place de la Porte de Passy**
**F-75016 Paris (FR)**

(54) **Procédé et dispositif pour la fabrication automatique de crêpes individuelles enduites ou non.**

(57) Dispositif de fabrication automatique de crêpes enduites ou non pour la consommation après la sortie de l'appareil.

L'invention concerne un dispositif de fabrication de crêpes, fabriquées automatiquement devant le consummateur.

Le dispositif est constitué par un tambour cuiseur d'une face de la crêpe (1) tournant sur un axe (2) chauffé par des résistances (3) sur lequel un distributeur (5, 29) étale la pâte à crêpes provenant d'un réservoir (19) ou de berlingots montés en chaîne (28). la crêpe est décollée par un râcleur (7) et retournée sur un plateau chauffant (8). enduite de sucre par un distributeur (11) ou de confiture par des distributeurs (12, 13). décollée, enroulée au retour du plateau (8) par le râcleur (15). tombe sur une barquette (16) et est évacuée vers le consommateur.

FIG. 1

EP 0 224 416 A1

## Description

## DISPOSITIF POUR LA FABRICATION AUTOMATIQUE DE CREPES INDIVIDUELLES ENDUITES OU NON

La présente invention concerne un procédé et un dispositif de fabrication automatique de crêpes (enduites ou non), afin d'en permettre la distribution au public immédiatement après leur fabrication. ceci après paiement de son prix par introduction de pièces de monnaie ou autre mode de paiement.

D'autres procédés et dispositifs permettent de fabriquer des crêpes par distribution de pâte sur une plaque chauffante de différentes formes, mais ne réalisant pas le cycle de fabrication automatique à n'importe quel intervalle de fabrication de la crêpe, la distribution sur la crêpe de sucre ou de confiture, au choix du consommateur, la cuisson de la crêpe sous ses yeux, puis sa mise à disposition automatique dans une barquette par exemple. sans compter les avantages de rapidité d'exécution. de fraîcheur du produit. de la consommation chaude de la crêpe, de son hygiène de fabrication et de son enduction.

La présente invention y remédie sur tous les points. Elle comporte en effet un réservoir de pâte amovible et interchangeable avec agitateur et filtre, ainsi que des réservoirs à sucre et à confiture également amovibles et interchangeables. un distributeur de pâte avec réglage de débit et d'une largeur correspondant à la largeur de la crêpe, un pulseur doseur de pâte qui régule le débit et permet l'uniformité de l'épaisseur de la crêpe, un tambour rotatif synchronisé recevant la pâte éjectée par le distributeur. Ce tambour est chauffé par des résistances à une température permettant la cuisson de la première face de la crêpe. La rotation de ce tambour. après interruption de distribution de pâte, dépose la crêpe, décollée par un râcleur, sur un plateau situé en-dessous du tambour et se déplaçant de façon à recevoir la crêpe ainsi retournée pour la cuire sur l'autre face grâce à son propre chauffage et recevoir pendant cette cuisson et son transfert soit du sucre soit la confiture choisie étalée sur la crêpe par des distributeurs doseurs commandés en synchronisation avec l'avancement du plateau-cuiseur. Au retour à la position de départ de ce plateau. un râcleur en forme de demi-cercle s'abaisse. râcle et enroule la crêpe, grâce à sa forme. laquelle crêpe en bout de plateau tombe par exemple dans une barquette pouvant la contenir et en fin de cycle cette barquette est expulsée vers l'extérieur de l'appareil où le consommateur peut s'en saisir et la consommer chaude.

On va décrire le mode de réalisation préféré de la présente invention. donné à titre d'exemple non limitatif enréférence aux dessins annexés. dans lesquels :

la figure 1 est une vue de profil du dispositif selon l'invention. équipé des réservoirs amovibles et du dispositif d'alimentation des barquettes ;

la figure 2 représente ce même dispositif vu de profil. permettant la distribution de la pâte à crêpes au moyen de berlingots : et

la figure 3 est une vue de dessus du dispositif de perforation et d'évacuation de la pâte des berlingots de la figure 2.

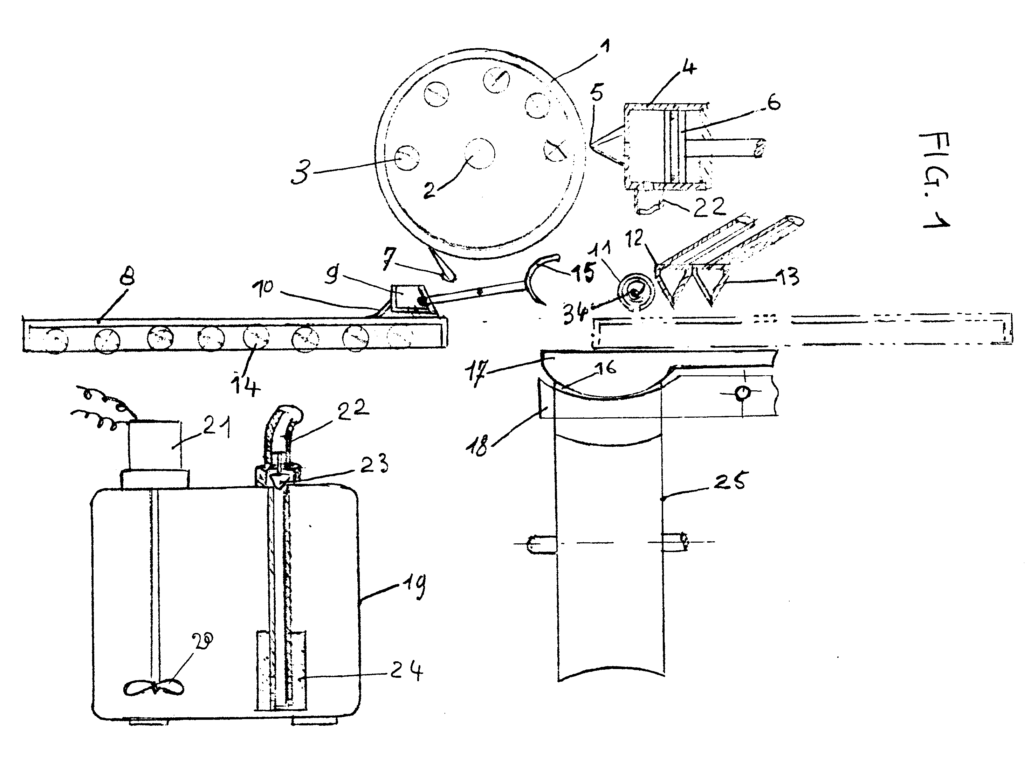

En se référant à la figure 1, le dispositif comprend :

un rouleau circulaire creux 1 tournant sur son axe 2. sur une de ses faces formant ainsi une sorte de cloche dans laquelle des résistances chauffantes par exemple 3 transmettent au moment voulu, la température de cuisson de la première face de la crêpe dont la pâte est distribuée sur ce rouleau par le distributeur doseur 4 muni d'un becquet 5 lequel, sur la largeur de la crêpe, se dilate set s'ouvre sous la pression du piston 6 pendant que le rouleau tourne dans un sens anti-horaire. A la fin de la course du piston 6. toute la pâte nécessaire à la crêpe est distribuée. Le tambour 1 continue de tourner et quand la crêpe cuite sur sa première face arrive sur le râcleur 7. elle se décolle et tombe sur le plateau 8, lequel a commencé d'avancer, entraîné par le tambour 1 recevant ainsi la crêpe qui se trouve retournée pour être cuite sur l'autre face. Toutefois, il est prévu un réservoir d'huile 9 avec une raclette 10 peremttant de lubrifier et de nettoyer le plateau.

Ledit plateau 8 continue son transfert de gauche à droite (par exemple), en continuant de recevoir la crêpe décollée du rouleau jusqu'au moment où celle-ci arrive sous les distributeurs 11, 12, 13 qui, au choix du consommateur, distribuent soit du sucre par le distributeur 11 et sa vis d'archimède 34, soit un type de confiture par le distributeur 12, soit un autre type de confiture par le distributeur 13, ceci par un doseur semblable à celui de la pâte à crêpes. En bout de transfert, le plateau sur lequel la deuxième face de la crêpe a cuit grâce aux résistances 14 qui y sont installées, revient en arrière après basculement de la raclette 15 et soulèvement du tampon huileur 9 et de sa raclette 10. Ladite raclette 15. par sa forme, décolle et enroule la crêpe avec ses assaisonnements et à l'extrémité du plateau, celle-ci tombe dans des barquettes de présentation 16 qui proviennent d'une bobine 25 en continu et qui amènent la crêpe jusqu'au consommateur avant que la barquette 16 ne soit séparée du reste du rouleau 25 par une cisaille 17, 18.

L'invention décrite ci-dessus utilise en ce qui concerne le déclenchement (par pièces de monnaie ou analogues), pour la mise en marche dudit dispositif. et son asservissement mécanique, électrique. électronique ou hydraulique, des moyens connus de l'homme de l'art. et pour la synchronisation entre les mouvements des moyens qui sont du domaine public. Il est précisé que la pâte à crêpes peut provenir d'un réservoir interchangeable 19 muni d'un agitateur 20 actionné par un moteur 21. Le pâte est aspirée par le piston du doseur 6 par le tube d'aspiration 22 muni d'un clapet anti-retour 23 et d'un filtre 24 : dans un autre cas la pâte et la confiture peuvent provenir de berlingots préparés en usine et contenant la dose exacte requise pour chaque crêpe à fabriquer, l'expulsion de la pâte et de la confiture de ces berlingots étant effectuée par pression du berlingot et grâce à des distributeurs appropriés.

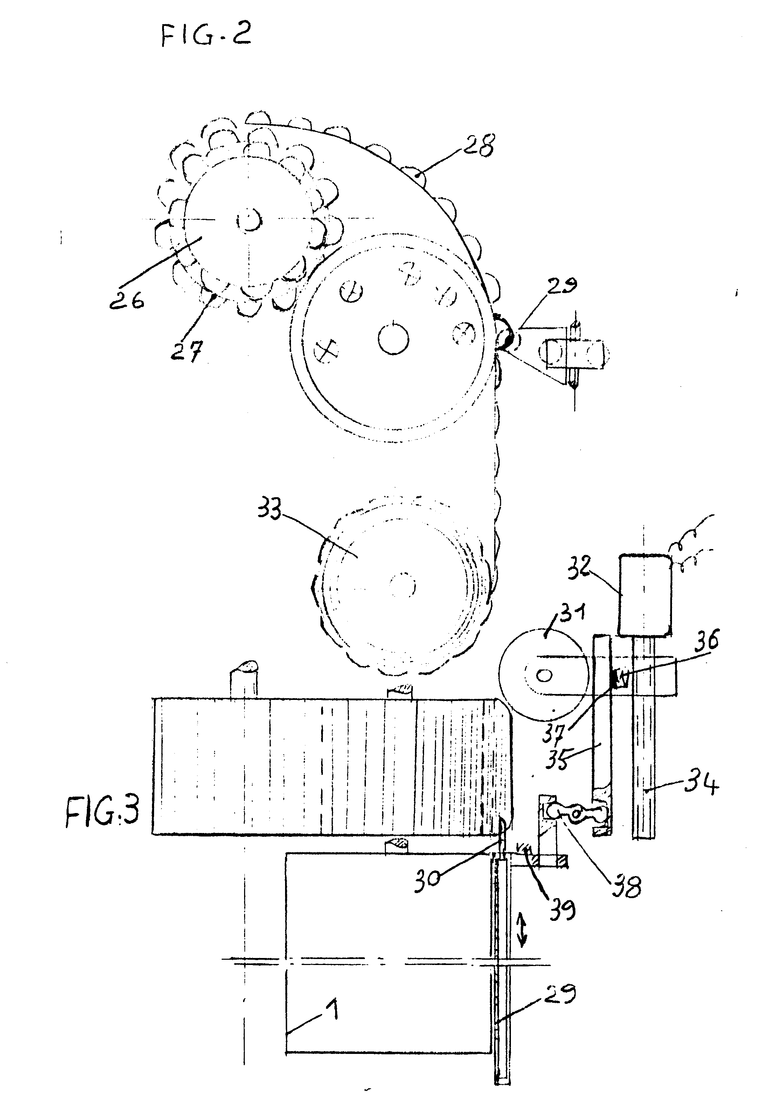

En se référant aux figures 2 et 3. on peut voir qu'en ce qui concerne l'alimentation en berlingots, le dispositif comprend une bobine 26 sur laquelle sont enroulés en continu les berlingots 28 sur leur bande-support 27, lesquels sont amenés devant le tambour-cuiseur 1 par des moyens mécaniques connus. Lorsque le berlingot se trouve devant le distributeur de pâte 29. équipé d'une aiguille perforatrice creuse 30. ledit berlingot est immobilisé afin d'être perforé par ladite aiguille. pressé par le galet 31 qui dans son mouvement d'expulsion. actionné par le moteur 32 et sa vis 24. pousse la pâte dans le distributeur 29 à travers l'aiguille perforatrice creuse 30, la vitesse d'écrasement correspondant en synchronisation avec la rotation du rouleau cuiseur 1. La bande des berlingots vides est ensuite enroulée sur un autre bobine 33. Le mouvement du distributeur 29 est obtenu par une tige 35 coulissant dans le support du galet 31 par un glissement dur provoqué par un ressort 36 et un patin de frottement 37. Le basculeur 38 sert uniquement à l'inversion du mouvement qui est arrêté en fin de course par une butée 39.

On notera que le même processus d'alimentation de la pâte à crêpes peut être utilisé pour les différents produits d'enduction.

## Revendications

1. Dispositif pour la fabrication et la distribution automatique de crêpes individuelles juste après leur cuisson, après réglement du prix et le choix de leur enduction, caractérisé en ce qu'ils comprennent un rouleau (1) chauffé par des résistances (3) tournant sur son axe (2) sur lequel, lorsqu'il tourne dans le sens anti-horaire, un distributeur doseur (4, 5, 6) dépose la pâte à crêpe après l'avoir aspirée du réservoir (19) où elle a été homogénéisée par un agitateur (20) actionnée par un moteur (21). ladite pâte passsant par un filtre (24). étant transportée par un tube d'aspiration (22) et maintenue par le clapet anti-retour (23), et en ce qu'un rouleau cuisant la première face de la crêpe puis un râcleur (7) la font tomber sur un plateau (8) chauffant grâce à des résistances (14), huilé préalablement par le réservoir à huile (9), le plateau étant râclé et nettoyé par le racleur (10), ledit plateau recevant la crêpe en se déplaçant vers la droite pour y recevoir du sucre par un des distributeurs (11) et sa vis d'archimède (34), ou de la confiture par les distributeurs (12. 13), utilisant le même doseur que la pâte à crêpes. le plateau (8) revenant en arrière, et le crêpe étant râclée et roulée par ladite raclette (15) après basculement du râcleur (10) et soulèvement du tampon huileur (9). ladite crêpe tombant alors à l'extrémité du plateau sur un barquette (16) provenant d'un rouleau en continu (25) et étant transportée à la portée du consommateur avant cisaillage par un cissaille (17, 18).

2. Dispositif selon la revendication 1. caractérisés en ce que les récipients qui contiennent la pâte à crêpes et la confiture, sont constitués de berlingots en matière plastique. dont la contenance représente la dose de la pâte ou de la confiture nécessaire à la fabrication et à l'enduction de la crêpe, une bobine (26) supportant la bande (27) sur laquelle les berlingots (28) sont assemblés, ladite bande (27) étant amenée devant le distributeur de pâte (29) qui est muni d'une aiguille perforatrice creuse (30) qui. au moment voulu. perfore le berlingot et le met en communication avec le distributeur (29), le galet (31) actionné par exemple par un moteur (32). écrasant le berlingot en expulsant la pâte avec une certaine pression pour qu'elle soit éjectée sur le rouleau (1) ; la bande supporte de berlingots vides étant elle-même enroulée sur une autre bobine (33) pour être évacuée.

3. Dispositif selon les revendications 1 et 2, caractérisés en ce que la perforation des berlingots par le distributeur coulissant (29) portant l'aiguille creuse (30), peut être effectuée par exemple par synchronisation grâce à l'avance du galet presseur (31) qui est déplacé par la vis (34) actionnée par le moteur (32) dans le support de galet (31), ce mouvement étant obtenu par une tige (35) coulissant dans le support du galet avec un glissement dur provoqué par un ressort (36) et un patin de frottement (37), l'inversion du mouvement pour la perforation du berlingot étant obtenue par le basculeur (38) qui limite la pénétration de l'aiguille par la butée (39).

0224416

FIG. 1

0224416

FIG. 2

FIG. 3

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-2 432 841  (C. JOURNO)<br>* Page 5, ligne 14 - page 6, ligne 18; figure 1 *<br>--- | 1-3 | A 21 B    5/03 |
| A | FR-A-1 543 243  (M. BALPE)<br>* Figure 1 *<br>--- | 1-3 | |
| A | US-A-3 543 694  (P.J.C. TANGUY)<br>* Figure 1 *<br>--- | 1-3 | |
| A | FR-A-2 389 947  (Y. UGARTE-MENDIA)<br>* En entier *<br>--- | 1-3 | |
| A | FR-A-2 048 694  (ATELIERS HEUZE, MALEVEZ & SIMON REUNIS)<br>* Figures 26,27 *<br>--- | | **DOMAINES TECHNIQUES RECHERCHES (Int. Cl.4)** |
| A | US-A-3 340 789  (L.G. SIMJIAN)<br>* En entier *<br>--- | 2,3 | A 21 B |
| A | US-A-3 224 361  (G. ÖJELID)<br>* En entier *<br>----- | 2,3 | |

Le présent rapport de recherche a été établi pour toutes les revendications

| Lieu de la recherche | Date d'achèvement de la recherche | Examinateur |
|---|---|---|
| LA HAYE | 23-02-1987 | FRANKS N.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82